# DEMANDE DE BREVET EUROPEEN

(11) **EP 1 595 970 A1**
(43) Date de publication de la demande: **16.11.2005**
(21) Numéro de dépôt: 05356043.9
(22) Date de dépôt: 04.03.2005
(51) Int. Cl.: C23C 14/06, C23C 16/34, A47J 36/02

(54) **Interface de cuisson pour appareils de cuisines collectives et de restaurants**

(30) Priorité: 05.05.2004 FR 0404830
(71) Demandeur: Opus 69, 01700 Miribel (FR)
(72) Inventeur: Zimmermann, Franck, 01500 Château-Gaillard (FR)
(74) Mandataire: Bratel, Gérard

(57) **Abrégé**

L'invention concerne une interface de cuisson (1) pour appareil de cuisson des aliments "par contact" dans des cuisines collectives et des restaurants, tels que des appareils de grillade, des marmites, des sauteuses, des crêpières. L'interface (1) possède un revêtement (4) constitué essentiellement d'une ou plusieurs couches de nitrure de titane, de nitrure de chrome, de nitrure de cobalt ou de nitrure de molybdène, et mesurant de l'ordre de quelques microns à quelques dizaines de microns d'épaisseur.

## Description

La présente invention concerne de façon générale les appareils de cuisson d'aliments à usage professionnel, c'est-à-dire des appareils destinés aux cuisines collectives et aux restaurants, et servant à la cuisson des aliments "par contact", tels que des appareils de grillade, des marmites, des sauteuses, des crêpières, etc...

Cette invention porte en particulier sur les interfaces de cuisson de tels appareils, c'est-à-dire leurs parties venant en contact avec les aliments, et encore plus particulièrement sur les revêtements de ces interfaces.

De manière habituelle dans ce domaine, on utilise des traitements de chromage, notamment pour les plaques de cuisson professionnelles, qui présentent des inconvénients notables : le chromage n'a pas de réelle propriété anti-corrosion, sa plage d'utilisation est réduite (de 0 à 350-400°C) et sa résistance aux chocs thermiques est médiocre. De plus, la couche première de cuivre électrolytique étant très souple, le moindre choc provoque l'écaillement de la couche seconde de chrome électrolytique. Enfin, la mise en oeuvre des bains d'électrolyte rend ce traitement très lourd pour l'environnement ; et la surchauffe (à partir de 350°C selon les applications) de ce traitement provoque la migration des ions chrome vers les aliments ou dans l'atmosphère sous forme gazeuse.

Le but de l'invention est de proposer un nouveau type de revêtement pour les interfaces d'appareils servant à la cuisson "par contact" des aliments, qui ne présente pas ces inconvénients, et qui soit sans danger tant pour l'utilisateur de l'appareil que pour le consommateur des aliments.

A cet effet, l'invention a pour objet une interface de cuisson pour appareils de cuisines collectives et de restaurants, l'interface étant caractérisée par le fait qu'elle possède un revêtement constitué essentiellement d'une ou plusieurs couches de nitrure de titane, de nitrure de chrome, de nitrure de cobalt ou de nitrure de molybdène, le revêtement mesurant de l'ordre de quelques microns à quelques dizaines de microns d'épaisseur.

En effet, les nitrures de titane, de chrome, de cobalt ou de molybdène, offrent ici de nombreux avantages pour la réalisation du revêtement.

Ainsi, un revêtement conforme à l'invention conserve des caractéristiques mécaniques élevées jusqu'à une température d'au moins 600°C. Il est alimentaire, anti-adhérent, et dispose d'un faible rayonnement thermique. Sa résistance aux chocs thermiques, aux rayures et à l'abrasion est excellente. Son coefficient de dilatation est comparable à celui de l'acier. Son amagnétisme permet des applications sur l'acier inoxydable. De plus, il est anallergique, bactériostatique et biocompatible, et sa couleur jaune dorée est très esthétique.

Le revêtement selon l'invention peut être obtenu par tout type de procédé, actuel ou à venir : par exemple, par un traitement thermochimique de nitruration ionique, connu en lui-même, dans lequel s'établit une réaction chimique entre un composé gazeux à des températures de l'ordre de 600 à 1000°C et la surface de la matière à traiter.

Le revêtement selon l'invention peut également être obtenu par une technique de déposition chimique en phase vapeur CVD (Chemical Vapor Deposition), connue en elle-même, qui permet de réaliser des dépôts solides, sur différents supports métalliques, par réaction chimique d'un mélange gazeux actif (TiCl₄ par exemple) décomposé thermiquement à des températures de 800 à 1000°C et des pressions de 10 à 100 mbar. Cette technique permet de réaliser des dépôts de couches relativement épaisses très homogènes et uniformes même sur des formes complexes, ainsi que des dépôts multi-couches permettant d'optimiser les performances selon les sollicitations de l'élément revêtu.

Le revêtement selon l'invention peut aussi être obtenu par une technique de déposition physique en phase vapeur (PVD) connue en elle-même, consistant à évaporer à basse pression un métal initialement à l'état solide, dont les vapeurs sont combinées avec un gaz ionisé pour produire un composé dur sous forme d'un film mince, adhérent, déposé vers 400-550°C sur les pièces à revêtir.

Le revêtement selon l'invention peut enfin être obtenu par un procédé de traitement thermochimique de diffusion d'azote sans plasma, réalisé à basse pression, et connu en lui-même, ledit procédé permettant d'obtenir une couche de dépôt encore plus dure que par les procédés susmentionnés.

Tous ces traitements de surface sont connus en eux-mêmes. Toutefois, il n'était pas connu d'utiliser ces techniques pour réaliser un revêtement constitué essentiellement de nitrure de titane, de chrome, de cobalt ou de molybdène, sur des appareils de cuisson des aliments à usage professionnel, le terme "appareil" désignant ici un équipement complet, avec sa propre source de chaleur, et non pas un simple ustensile.

Une interface professionnelle de cuisson des aliments avec un revêtement en nitrure de titane, de chrome, de cobalt ou de molybdène,selon la présente invention aura par conséquent des qualités fonctionnelles améliorées, grâce :
- à son anti-adhérence, les aliments à griller ou à cuire (tels que pièces de viande ou de poisson) ne collant pas au revêment et pouvant ainsi être aisément déplacés et retirés ;
- à son alimentarité à toutes températures inférieures à 600°C ;
- à son faible rayonnement thermique, la rendant idéale pour une cuisson "par contact", les aliments se trouvant directement en contact avec le revêtement ;
- à la possibilité d'utiliser des températures de cuisson nettement plus élevées qu'avec les revêtements conventionnels, ;
- à sa solidité permettant de résister de manière incomparable aux chocs thermiques, aux rayures et à l'abrasion ;
- à sa grande stabilité chimique ;
- à sa facilité de nettoyage, en particulier un nettoyage à chaud et à l'eau.
   Il sera ainsi sans danger pour les aliments.
   L'invention a également pour objet un appareil de cuisines collectives et de restaurants comportant une ou plusieurs interfaces de cuisson pourvues d'un tel revêtement.
   D'autres avantages et caractéristiques apparaîtront plus clairement à la lecture de la description suivante de l'invention, se référant aux dessins annexés sur lesquels
- la figure 1 est une vue schématique partielle en coupe d'une interface avec couche de dépôt issue d'un traitement usuel par chromage ;
- la figure 2 est une vue schématique partielle en coupe d'une interface avec couche de revêtement selon l'invention ;
- la figure 3 est une vue en perspective d'un exemple de réalisation de l'invention sur un appareil à gaz ou électrique avec des plaques de grillade ;
- la figure 4 est une vue schématique en coupe de l'exemple de réalisation de la figure 3 ;
- la figure 5 est une vue en perspective d'un exemple de réalisation de l'invention sur une marmite ;
- la figure 6 est une vue schématique en coupe de l'exemple de réalisation de la figure 5 ;
- la figure 7 est une vue en perspective d'un exemple de réalisation de l'invention sur une sauteuse ;
- la figure 8 est une vue schématique en coupe de l'exemple de réalisation de la figure 7 ;
- la figure 9 est une vue schématique en coupe d'un exemple de réalisation de l'invention sur un gaufrier ;
- la figure 10 est une vue partielle en perspective d'un exemple de réalisation de l'invention sur une crêpière.

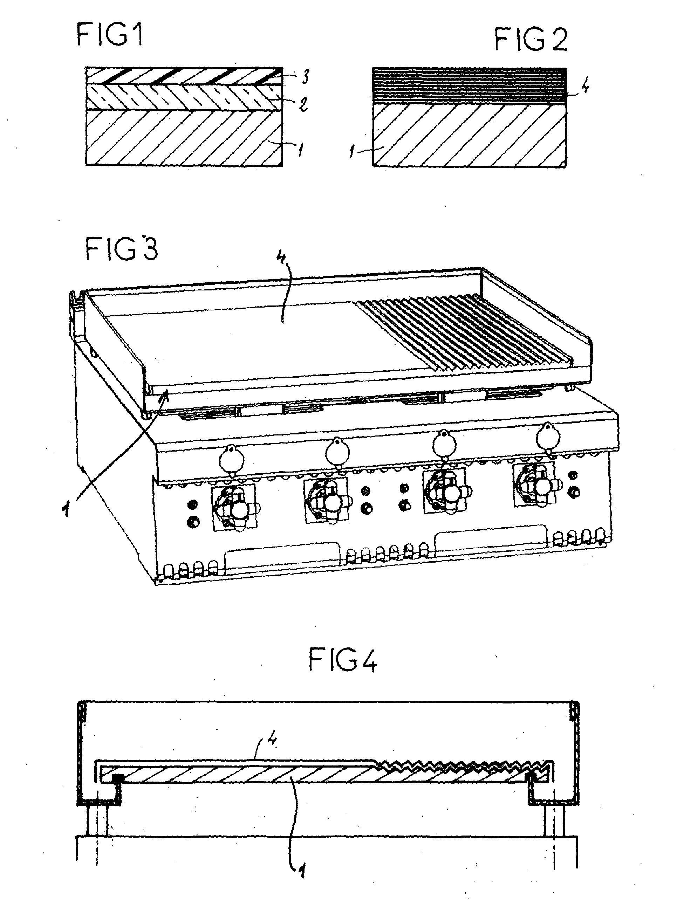

La figure 1, qui correspond à l'état de la technique, montre que la couche de dépôt, qui revêt une plaque de cuisson professionnelle en acier 1 traité par chromage, est constituée de deux strates : une première strate de cuivre électrolytique 2 pour l'adhérence, issue d'une première opération de cuivrage ; et une seconde strate de chrome électrolytique 3, issue d'une seconde opération de chromage.

La figure 2 représente schématiquement une coupe d'un revêtement 4 selon l'invention, qui recouvre une plaque de cuisson professionnelle en acier 1.

Ce revêtement 4 mesure de l'ordre de quelques microns à quelques dizaines de microns d'épaisseur ; et il est selon les principes utilisés, constitué essentiellement d'une ou plusieurs couches de nitrure de titane, de nitrure de chrome, de nitrure de cobalt ou de nitrure de molybdène ; la couleur obtenue de ce revêtement 4 est fonction du métal employé (dorée dans le cas du titane) et de la nature exacte de la nitruration.

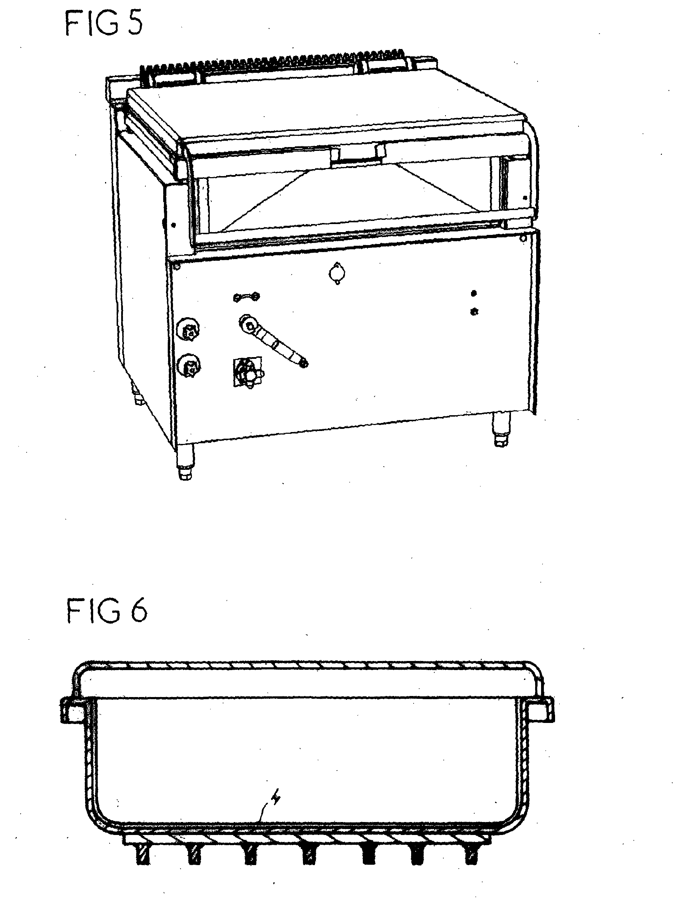

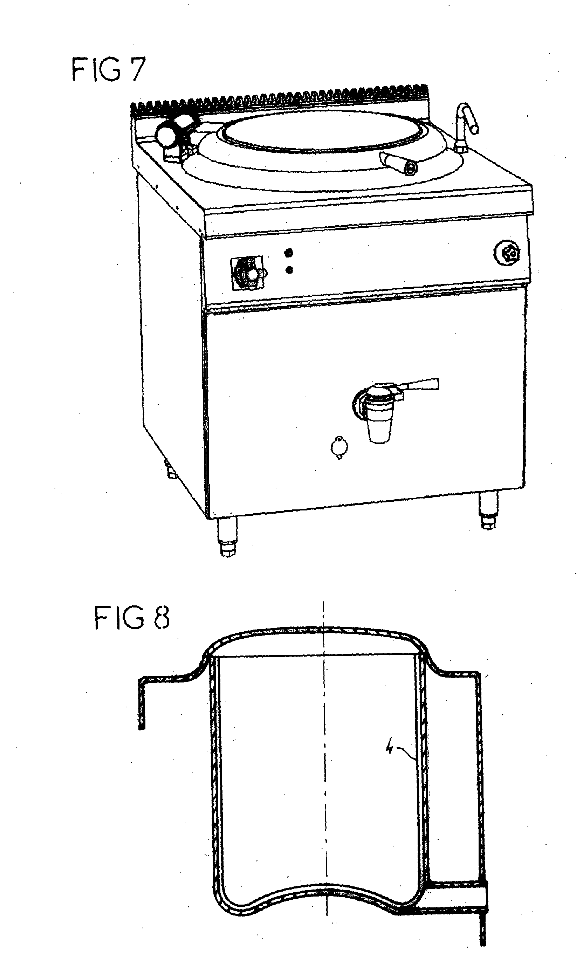

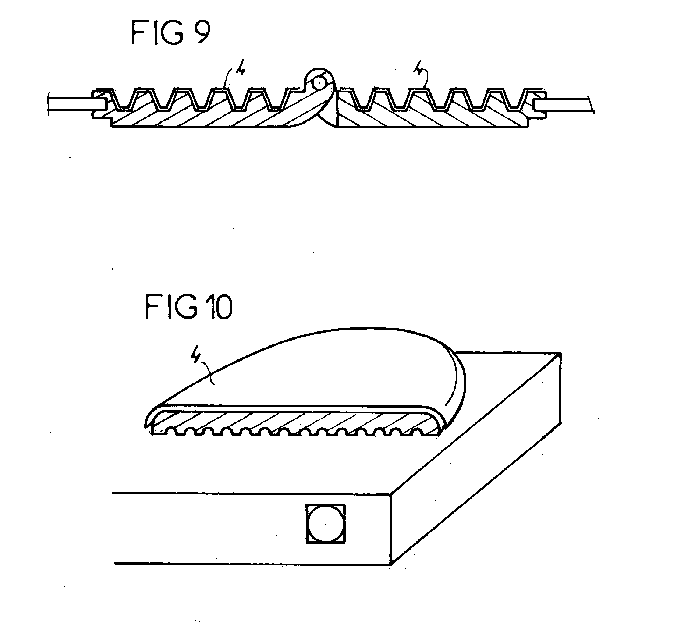

Les figures suivantes représentent différents appareils de cuisines collectives et de restaurants, dont l'interface de cuissson est revêtue d'une couche de revêtement 4 selon l'invention, tels qu'une plaque de grillade (figures 3 et 4), une marmite (figures 5 et 6), une sauteuse (figures 7 et 8), un gaufrier (figure 9), une crêpière (figure 10). On notera que, dans tous les cas, il s'agit (sous les dénominations précédentes) d'interfaces généralement fixes appartenant à des véritables appareils de cuisson complets, destinés à équiper des cuisines de collectivités ou de restaurants, et non pas de simples ustensiles tels que des casseroles ou des poêles à frire, non concernés par la présente invention.

Il convient de souligner que la nitruration a pour principal intérêt de conduire à un composé céramo-métallique beaucoup plus stable à la température et aux agressions chimiques que le métal sous forme de revêtement dans sa forme primitive, ce qui évite par exemple la migration des ions chrome vers les aliments ou dans dans l'atmosphère sous forme gazeuse, comme dans le cas du chromage selon l'état de la technique.

Comme il va de soi, et comme il ressort de ce qui précède, l'invention ne se limite pas aux seules formes d'exécution et applications de cette interface de cuisson qui ont été décrites ci-dessus, à titre d'exemples ; elle en embrasse, au contraire, toutes les variantes de réalisation et d'application respectant le même principe. C'est ainsi, notamment, que l'on ne s'éloignerait pas du cadre de l'invention en appliquant celle-ci à des appareils de cuisson avec interfaces multiples, ou à des interfaces servant au réchauffage, à la conservation ou à la présentation des aliments.

## Revendications

1. Interface de cuisson (1) pour appareils de cuisson des aliments "par contact", destinés aux cuisines collectives et aux restaurants, tels que des appareils de grillade, des marmites, des sauteuses, des crêpières, **caractérisée en ce qu'**elle possède un revêtement (4) constitué essentiellement d'une ou plusieurs couches de nitrure de titane, de nitrure de chrome, de nitrure de cobalt ou de nitrure de molybdène, ledit revêtement (4) mesurant de l'ordre de quelques microns à quelques dizaines de microns d'épaisseur.

2. Appareil de cuisines collectives et de restaurants comportant une ou plusieurs interfaces de cuisson (1) pourvues d'un revêtement (4) selon la revendication 1.
